# EUROPEAN PATENT SPECIFICATION

(11) **EP 1 686 815 B1**
(45) Date of publication and mention of the grant of the patent: **06.09.2017**
(21) Application number: 06250448.5
(22) Date of filing: 26.01.2006
(51) Int. Cl.: H04M 1/725, H04M 1/727

(54) **Registration and deregistration of a cordless terminal in a cordless extension phone system**
Anmeldung sowie Abmeldung eines schnurlosen Endgerätes in einem schnurlosen Telefonsystem
Enregistrement ainsi que desenregistrement de dispositifs sans fil dans un système de telephonie sans fil

(30) Priority: 26.01.2005 JP 2005018700
(43) Date of publication of application: 02.08.2006
(73) Proprietor: Brother Kogyo Kabushiki Kaisha, Nagoya-shi, Aichi-ken 467-8561 (JP)
(72) Inventor: Kuwabara, Kazuhiro, Nagoya-shi Aichi-ken 467-8562 (JP)
(74) Representative: J A Kemp

(56) References cited:
- PANASONIC: "2.4 GHz Multi-Handset Cordless Phone System. Model No. KX-TG4000B Operating Instructions"[Online] 10 October 2003 (2003-10-10), pages 1-107, XP002381411 Retrieved from the Internet: URL:http://telecom.hellodirect.com//docs/S upport/emanuals/7783eman.pdf> [retrieved on 2006-05-15]
- SIEMENS: "GIGASET 4170-4175 ISDN OPERATING INSTRUCTIONS"[Online] February 2002 (2002-02), pages 1-107, XP002381412 Munich Retrieved from the Internet: URL:http://shc-download.siemens.com/reposi tory/243/24394/gigaset417x_ug_int_eng_2.pd f> [retrieved on 2006-05-15]
- PATENT ABSTRACTS OF JAPAN vol. 013, no. 534 (E-852), 29 November 1989 (1989-11-29) & JP 01 218223 A (NIPPON TELEGR & TELEPH CORP <NTT>; others: 01), 31 August 1989 (1989-08-31)

## Description

### TECHNICAL FIELD

Aspects of the present invention relate to a communication apparatus including a main device and a mobile device that can be connected to the main device

### BACKGROUND

Hitherto, a cordless extension telephone system has been available as a representative of communication apparatus made up of a main device and a mobile device. The cordless extension telephone system includes the main device connected to a public telephone line and the mobile device for enabling the user to hold a telephone conversation like the main device as the mobile device is connected to the main device wirelessly. To add a new mobile device, predetermined entry operation is performed for the main device and the mobile device to be added, whereby the added mobile device can be newly registered in the main device. (For example, refer to JP-A-1-218223, etc.)

By the way, to register the added mobile device in the main device, when the user switches both the main device and the mobile device to a special mode such as an addition mode, for example, the main device transmits a registration command to the mobile device. The mobile device receiving the registration command enters an entry wait state for accepting entry of the registration number from the user. When the user enters the registration number, the mobile device stores the registration number as the registration number of the mobile device. In the main device, the registration number is stored as the registration number of the mobile device. The mobile device is thus added.

The Panasonic publication "2.4 GHz Multi-Handset Cordless Phone System. Model No. KX-TG4000B Operating Instructions" 10 October 2003, pages 1 - 107 and the Siemens publication "GIGASET 4170-4175 ISDN OPERATING INSTRUCTIONS" February 2002, pages 1 - 107 both provide operating instructions for a telephone device with one or more wireless handsets in which registration information regarding the handsets may be displayed.

### SUMMERY

However, the method in the related art as described above requires that the user should directly enter the registration number of the mobile device and thus to register the mobile device, various entry mistakes such that the user enters an already used registration number or a totally unrelated number that cannot be used as a registration number occur. If such an entry mistake occurs, it takes time that the user completes the mobile device registration operation.

On the other hand, to cancel registration of the mobile. device, various entry mistakes such that the user enters an unused registration number or a totally unrelated number can occur. In this case, it takes time that the user completes the mobile device cancel operation.

Aspects of the invention provide a communication apparatus for making it possible to prevent an entry mistake from occurring and enabling the user to reliably and easily register an additional device and cancel registration of the registered additional device.

According to an aspect of the invention, there is provided a communication apparatus as defined in appended claim 1.

According to the communication apparatus, to register an additional device, the main device automatically selects the registration number to be assigned to the additional device and sets the registration number as the registration number of the additional device.

Thus, an entry mistake such that the user enters a totally unrelated number that cannot be used as the registration number can be prevented from occurring. The user can be saved from having to select the registration number and thus can easily register the additional device.

According to the communication apparatus, the main device displays information indicating which of the registration numbers is used on the display unit.

Thus, the user can easily keep track of the use state of the registration numbers, in other words, the registration state of the additional devices; the ease of use is provided for the user.

According to another aspect of the disclosure, there is provided a communication apparatus including: a main device a main device that has: a main device storage section that stores information to the effect that one of provided registration numbers to be assigned to an additional device is used as the registration number of a additional device; a selection unit that selects one registration number stored in the main device storage section according to a specific rule from among already used registration numbers corresponding to the information to the effect that the registration number is used as the registration number of the additional device; and a deletion unit that deletes information to the effect that the registration number selected by the selection unit is used as the registration number of the additional device from the main device storage section; and the additional device capable of communicating with the main device wirelessly.

According to the communication apparatus, to cancel registration of the additional device, the main device automatically selects one of the already used registration numbers assigned to the already registered additional devices.

Thus, an entry mistake such that the user enters an unused registration number or enters a totally unrelated number which is not any registration number can be prevented from occurring. The user can be saved from having to select the registration number (already used registration number) and thus can easily cancel registration of the additional device.

Preferably, the display control unit is arranged to cause the display unit to list a plurality of provided registration numbers to be assigned to an additional device and the selection unit is arranged to select one registration number out of a registration number list displayed on the display unit.

According to the communication apparatus, the main device lists the registration numbers of candidates for the registration number of the additional device on the display unit in registering the additional device and selects the registration number to be used based on entry of the user out of the registration number list.

Thus, an entry mistake such that the user enters a totally unrelated number that cannot be used as the registration number can be prevented from occurring. The user can also select his or her favorite number, so that the ease of use is provided for the user.

According to still another aspect of the invention there is provided a communication apparatus as defined in appended claim 9.

According to the communication apparatus, to cancel registration of the additional device, the main device selects the registration number to be canceled from among the already used registration numbers based on entry of the user.

Thus, an entry mistake such that the user enters an unused registration number can be prevented from occurring. The user can also select his or her favorite number, so that the ease of use is provided for the user.

### BRIEF DESCRIPTION OF THE DRAWINGS

Illustrative aspects of the invention may be more readily described with reference to the accompanying drawings:
FIG. 1 is an external view showing a cordless extension telephone system according to a first aspect of the disclosure;
FIGS. 2A and 2B are external views showing a mobile device and a charging stand making up the cordless extension telephone system of the first aspect of the disclosure;
FIG. 3 is a block diagram showing the configuration of a main device of the first aspect of the disclosure;
FIG. 4 is a block diagram showing the configuration of the mobile device of the first aspect of the disclosure;
FIG. 5 is a flowchart showing addition processing executed by a CPU of the main device of the first aspect of the disclosure;
FIG. 6 is a schematic representation showing display images displayed on a display panel of the first aspect of the disclosure;
FIG. 7 is a flowchart showing addition processing executed by a CPU of the mobile device of the first aspect of the disclosure;
FIG. 8 is a schematic representation showing display images displayed on a display panel of the first aspect of the disclosure;
FIG. 9 is a flowchart showing addition processing executed by a CPU of a main device of a second aspect of the disclosure;
FIG. 10 is a schematic representation showing display images displayed on a display panel of the second aspect of the disclosure; and
FIG. 11 is a flowchart showing addition processing executed by a CPU of a main device of a third aspect of the disclosure.

### - DETAILED DESCRIPTION

Referring now to the accompanying drawings, there are shown aspects of the disclosure.

### [First aspect]

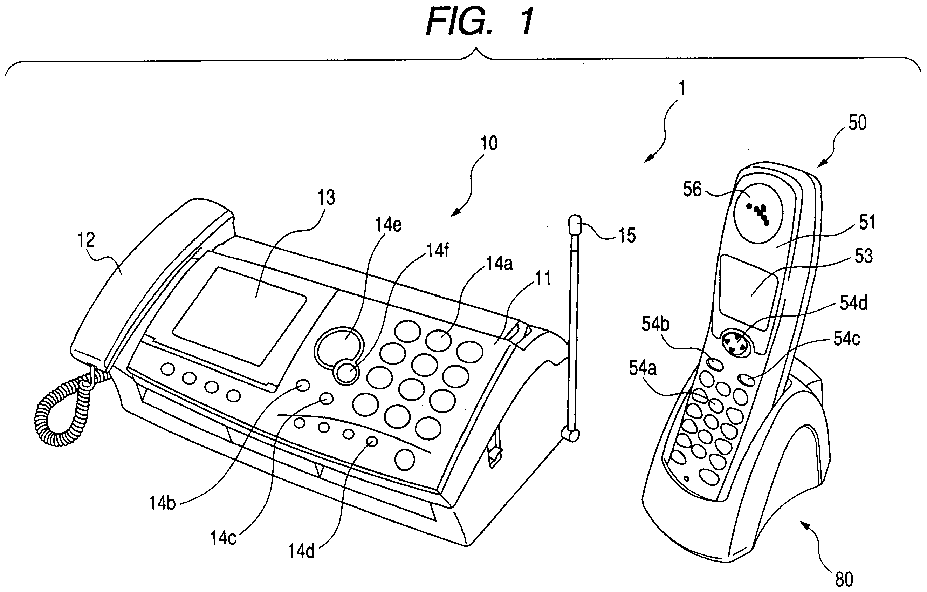

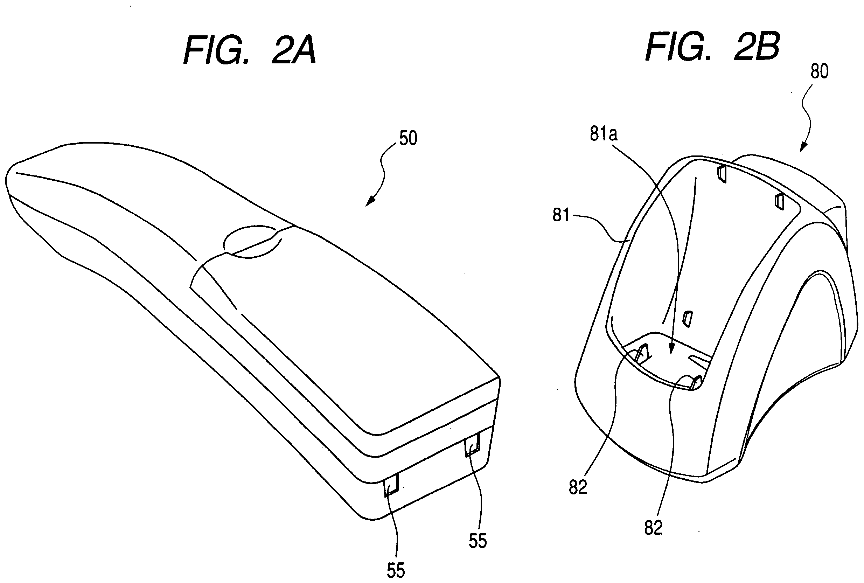

FIG. 1 is a perspective view showing the appearance of a cordless extension telephone system 1, FIG. 2A is a perspective view showing the rear of a mobile device 50 and FIG. 2B is a perspective view of a charging stand.

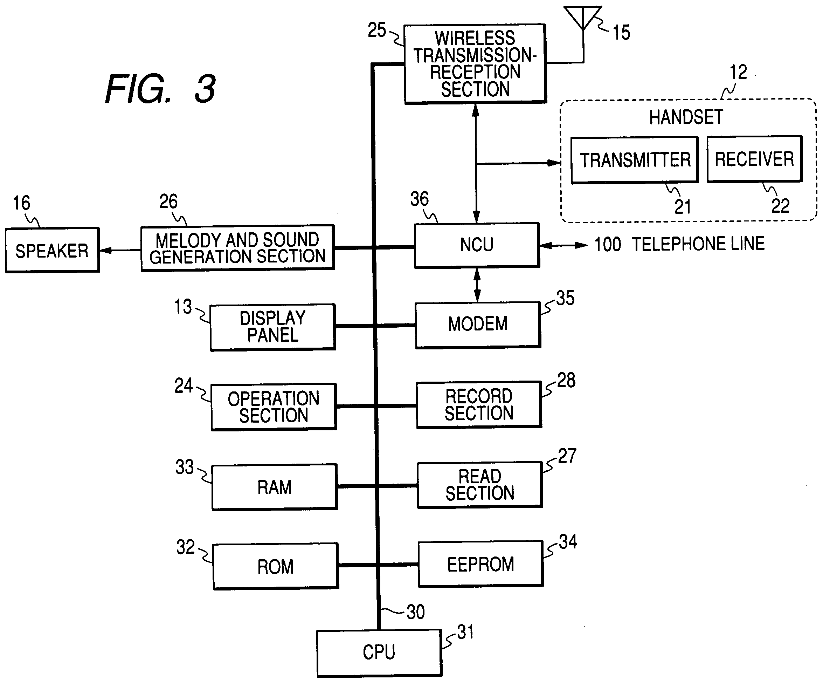

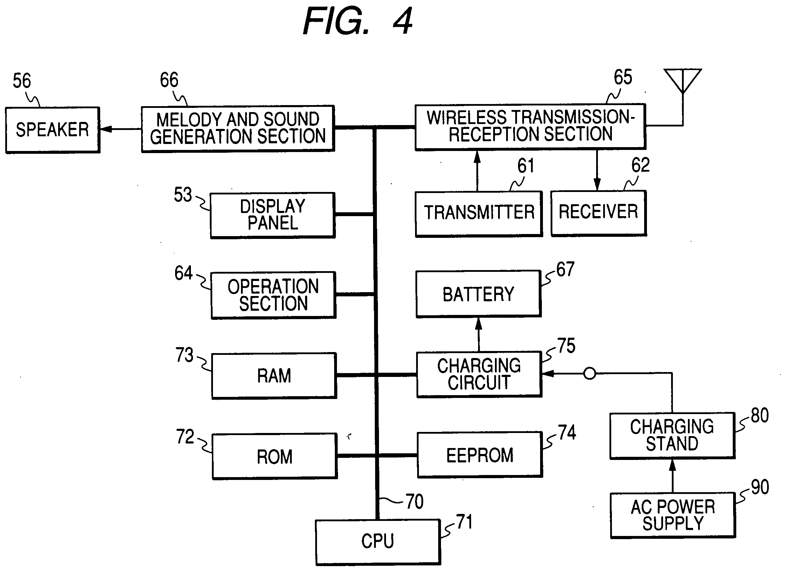

The cordless extension telephone system 1 is made up of a main device 10 connected to a telephone line 100 (see FIG. 3), the mobile device 50 for communicating with the mobile device 10 over a wireless channel, and a charging stand 80 being connected to an external AC power supply (see FIG. 4) for charging the mobile device 50 placed detachably on the charging stand at a predetermined voltage, as shown in FIG. 1.

A handset 12 used in a state in which it is detached from the main device 10 main body is attached to a side of a main device main body case 11 of the main device 10. Further, installed on the top of the main device main body case 11 are a display panel 13 as a display unit for displaying various pieces of information and various operation buttons such as dial buttons 14a for entering the telephone number of a called party, a playback button 14b operated to play back a message recorded on the answering machine, etc., an erasion button 14c operated to erase the message recorded on the answering machine, the entered telephone number, etc., a stop button 14d operated to cancel operation, a selection button 14e operated to make a selection on a menu screen, etc., displayed on the display panel 13, and a confirmation button 14f operated to confirm the entered telephone number, etc.

The display panel 13 is a liquid crystal display (LCD) with a backlight for illuminating the display screen from the rear.

The mobile device 50 is provided with a display panel 53 for displaying various pieces of information, various operation buttons such as dial buttons 54a for entering the telephone number of a called party, an outside line conversation button 54b operated to start an outside line conversation, a stop button 54c operated to terminate conversation and cancel operation, and a selection button 54d operated to make a selection on a menu screen, etc., displayed on the display panel 53, and charging terminals 55 (see FIG. 2A) for charging a battery 67 (see FIG. 4) for supplying power to the whole mobile device 50 from the charging stand 80 on the surface of a mobile device main body case 51 shaped like a handset.

The display panel 53 is a liquid crystal display (LCD) with a backlight for illuminating the display screen from the rear.

The charging stand 80 is made up of a charging stand main body 81 formed with a placement recess 81a for detachably placing the-mobile device 50 and charging terminals 82 which are provided in the placement recess 81a and come in contact with the charging terminals 55 of the mobile device 50 when the mobile device 50 is placed in the placement recess 81a, as shown in FIG. 2B.

FIG. 3 is a block diagram showing the configuration of the main device 10.

As shown in FIG. 3, the main device 10 includes a CPU 31 for operating in accordance with various programs, ROM 32 previously storing programs and fixed data for causing the CPU 31 to perform various types of processing, RAM 33 for temporarily storing the operation result of the CPU 31, EEPROM 34 as a main device storage section for rewritably storing various pieces of data, a MODEM 35 for connecting the main device 10 to the telephone line 100, an NCU 36 for inputting/outputting a voice signal transmitted between the telephone line 100 and the MODEM 35, a wireless transmission-reception section 25 being connected to an antenna 15 for transmitting and receiving various signals including the voice signal to and from the mobile device 50 by conducting wireless communications, a melody and sound generation section 26 being connected to a speaker 16 for outputting a sound from the speaker 16, the above-mentioned display panel 13, an operation section 24 made up of the various operation buttons 14 (a, b, c, d, e, f), etc., a read section 27 for reading image data, etc., a record section 28 for recording the read image data on paper, etc., and a system bus 30 for connecting the components.

Further, the handset 12 made up of a transmitter 21 and a receiver 22 for holding a conversation is connected to the wireless transmission-reception section 25 and the NCU 36.

FIG. 4 is a block diagram showing the configuration of the mobile device 50.

As shown in FIG. 4, the mobile device 50 includes a CPU 71 for operating in accordance with various programs, ROM 72 previously storing programs and fixed data for causing the CPU 31 to perform various types of processing, RAM 73 for temporarily storing the operation result of the CPU 71, EEPROM 74 as a mobile device storage section for rewritably storing various pieces of data, a charging circuit 75 being connected to a battery 67 for charging the battery 67, a wireless transmission-reception section 65 being connected to an antenna for transmitting and receiving various signals including the voice signal to and from the main device 10 by conducting wireless communications, a melody and sound generation section 66 being connected to a speaker 56 for outputting a sound from the speaker 56, the above-mentioned display panel 53, an operation section 64 made up of the various operation buttons 54 (a, b, c, d), etc., and a system bus 70 for connecting the components.

Further, a transmitter 61 and a receiver 62 for holding a conversation are connected to the wireless transmission-reception section 65. An external AC power supply 90 can be connected to the charging circuit 75 through the charging stand 80.

In the described cordless extension telephone system 1, the main device 10 can hold an outside line conversation with an external associated communication terminal over the telephone line 100 and can also hold an extension conversation with the mobile device 50. The user can register the mobile device 50 in the main device 10 (namely, make it possible to have an extension conversation therebetween) or cancel registration of the mobile device 50 by performing predetermined entry operation in the main device 10 and the mobile device 50. Processing executed in the main device 10 and the mobile device 50 in the registration or the registration cancel will be described below in detail.

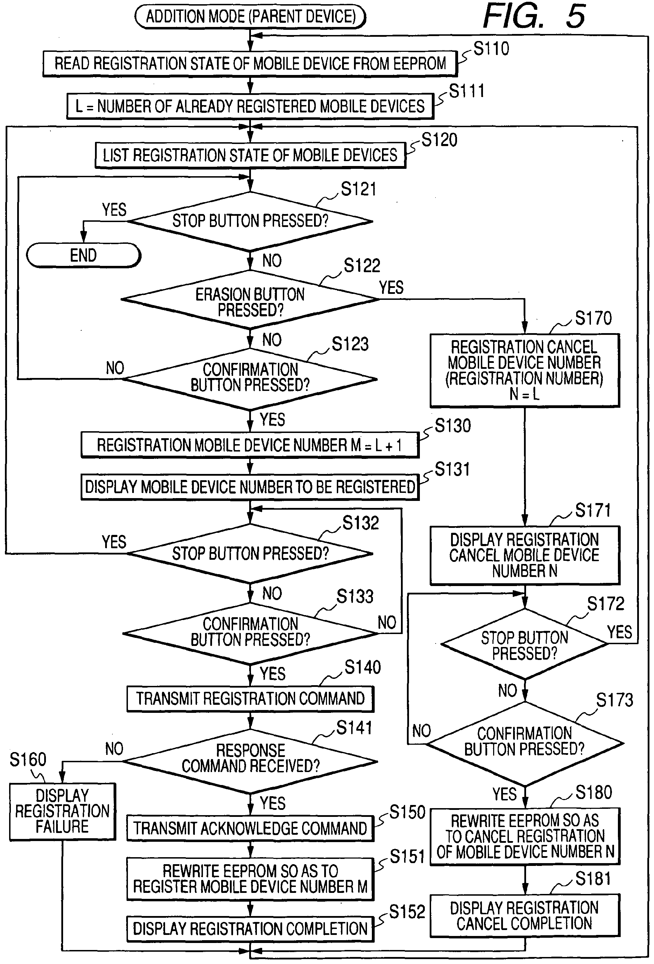

FIG. 5 is a flowchart showing registration and registration cancel processing of the mobile device 50 executed by the CPU 31 of the main device 10 (which-will be hereinafter referred to as addition processing).

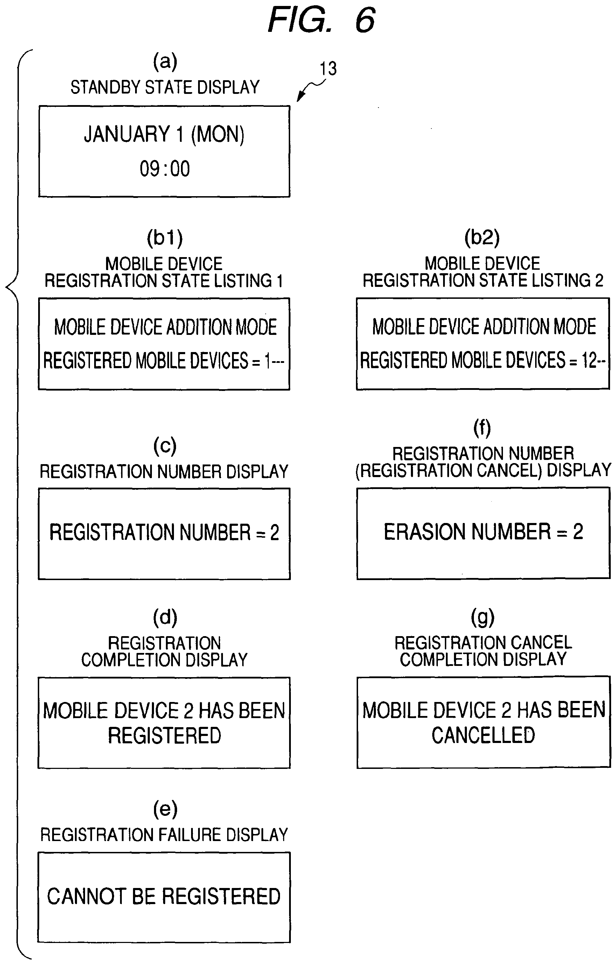

In the usual state, the main device 10 is in a standby state for accepting entry of the telephone number of a called party, etc. When the user sets the main device 10 to an addition mode by operating a mode switching button of the various buttons described above, the addition processing is started. In the standby state, information of the date, the day of the week, the time, etc., is displayed on the display panel 13 as illustrated in FIG. 6 (a).

In the addition processing, first, at S110, the registration state of the mobile device 50 in the main device 10, in other words, which of the registration numbers used in registering the mobile device 50 (in the aspect, an integer of 1 to 4) is assigned to, namely, used for the mobile device 50 is read from the EEPROM 34. Next, at S111, the number of mobile devices 50 registered in the main device 10 at present, L, is calculated based on information concerning the registration state of the mobile device 50 read from the EEPROM 34. Here, the calculation result is once stored in the RAM 33.

At S120, the registration state of the mobile device 50 is listed on the display panel 13 as illustrated in FIG. 6 (b1) or (b2). That is, on the display panel 13, the mode name representing the current operation mode, "mobile device addition mode," is displayed and a list of the already used registration numbers corresponding to the already registered mobile devices 50 is displayed below the "mobile device addition mode."

In FIG. 6 (b1), the number of the registered mobile devices 50, L, is 1 (only registration number 1 is already used as the registration number) and "registered mobile device" of item name is displayed with "1" on the side thereof. In FIG. 6 (b2), the number of the registered mobile devices 50, L, is 2 (registration numbers 1 and 2 are already used as the registration numbers) and "registered mobile device" of item name is displayed with "1" and "2" on the side thereof. An unused registration number is displayed simply as a horizontal line rather than the registration number, thereby enabling the user to recognize that an additional mobile device 50 can be registered.

Next, the process goes to S121 and whether or not the user presses the stop button 14d for canceling the operation is determined. When it is determined that the user presses the stop button 14d, the addition processing is terminated. On the other hand, when it is determined at S121 that the user does not press the stop button 14d, then the process goes to S122 and whether or not the user presses the erasion button 14c for making a transition to a registration cancel flow of the mobile device 50 is determined. When it is determined that the user does not press the erasion button 14c, then the process goes to S123.

At S123, whether or not the user presses the confirmation button 14f for making a transition to a registration flow of the mobile device 50 is determined. When it is determined that the user does not press the confirmation button 14f, the process returns to S121. On the other hand, when it is determined at S123 that the user presses the confirmation button 14f, then the process goes to S130.

At S130, the number of the already registered mobile devices 50, L, calculated at S111 plus one, namely, the minimum one-of the unused registration numbers is calculated as the registration number to be assigned to the newly registered mobile device 50 (also called registration mobile device number) M. Next, the process goes to S131 and the registration number M is displayed on the display panel 13 as illustrated in FIG. 6 (c). FIG. 6 (c) shows the display produced when the number of the already registered mobile devices 50 is one (namely, L=1), in which case the registration number used as the "registration number" of the mobile device 50, "2," is displayed.

Alternatively, At S130, if the registration number M newly assigned to the mobile device 50 is temporarily determined M=1, for example, and the temporarily determined number 1 is already used as the registration number, the number M plus one, namely, M=2 may be temporarily determined and if the temporarily determined registration number is unused, it may be calculated as the registration number M. In doing so, for example, when 1 and 3 are used as the registration numbers, 2 (the minimum one of the unused registration numbers) is selected as the registration number M.

Next, the process goes to S132 and whether or not the user presses the stop button 14d is determined. When it is determined that the user presses the stop button 14d, the process returns to S120. On the other hand, when it is determined at S132 that the user does not press the stop button 14d, then the process goes to S133 and whether or not the user presses the confirmation button 14f for confirming the registration of the mobile device 50 is determined. When it is determined that the user does not press the confirmation button 14f, the process returns to S132. On the other hand, when it is determined at S133 that the user presses the confirmation button 14f, then the process goes to S140.

At S140, a registration command to store the registration number is transmitted to the mobile device 50. Information representing the registration number M calculated at S130 is added to the registration command.

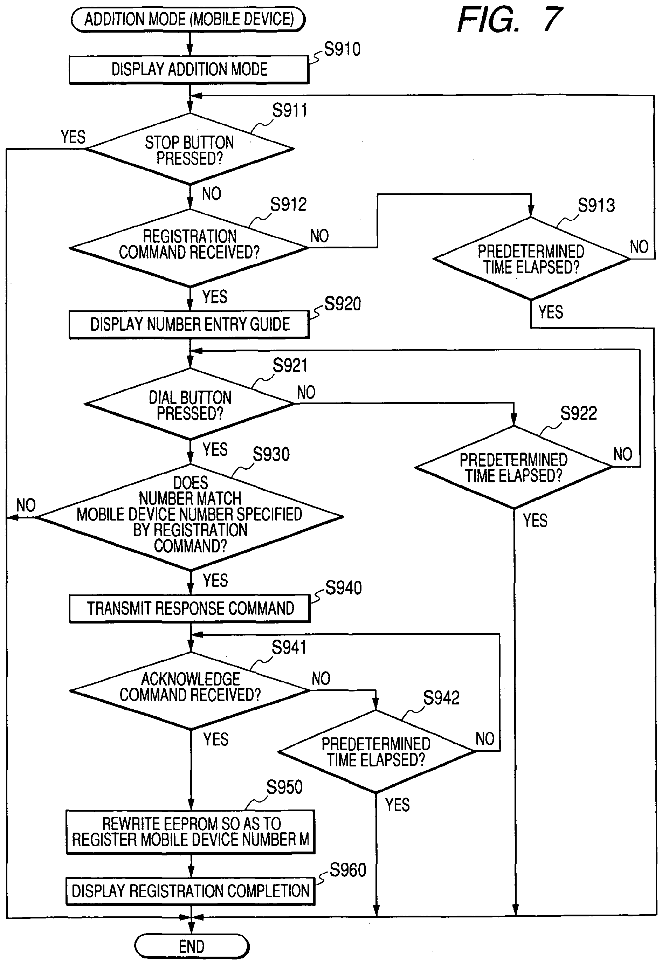

Next, the process goes to S141 and whether or not a response command is received is determined. The response command is a command transmitted from the mobile device 50 in response to the registration command at S940 in FIG. 7 described later. When it is determined that a response command is not received, then the process goes to S160 and a message to the effect that the registration ends in failure is displayed-on the display panel 13 as illustrated in FIG. 6 (e) . Then, the process returns to S110. On the other hand, when it is determined at S141 that a response command is received, then the process goes to S150.

At S150, an acknowledge command representing reception of the response command is transmitted to the mobile device 50. Next, the process goes to S151 and the registration number newly assigned to the mobile device 50 is stored in the EEPROM 34 as the registration number of the mobile device 50. At S152, a registration completion message with the registration number is displayed on the display panel 13 as illustrated in FIG. 6 (d). Then, the process returns to S110.

When it is determined at S122 that the user presses the erasion button 14c, then the process goes to S170 and the number representing the number of the already registeredmobile devices 50, L, calculated at S111, namely, the maximum one of the already used registration numbers is calculated as registration number N to be canceled. In other words, the registration of the mobile device with the maximum registration number among the already registered mobile devices 50 is canceled. Then, the process goes to S171 and the registration number is displayed on the display panel 13 as illustrated in FIG. 6 (f). FIG. 6 (f) shows the display produced when the number of the already registered mobile devices 50 is two (namely, L=2), in which case the registration number "2" is displayed as the "erasion number" to cancel the registration of the mobile-device.

Next, at S172, whether or not the user presses the stop button 14d is determined. When it is determined that the user presses the stop button 14d, the process returns to S120. On the other hand, when it is determined at S172 that the user does not press the stop button 14d, then the process goes to S173 and whether or not the user presses the confirmation button 14 f for confirming the registration cancel of the mobile device 50 is determined. When it is determined that the user does not press the confirmation button 14f, the process returns to S172. On the other hand, when it is determined at S173 that the user presses the confirmation button 14f, then the process goes to S180.

At S180, the registration number corresponding to the mobile device 50 whose registration is cancelled is stored in the EEPROM 34 as an unused registration number. At S181, a registration cancel completion message with the registration number is displayed on the display panel 13 as illustrated in FIG. 6 (g). Then, the process returns to S110.

FIG. 7 is a flowchart showing the addition processing executed by the CPU 71 of the mobile device 50.

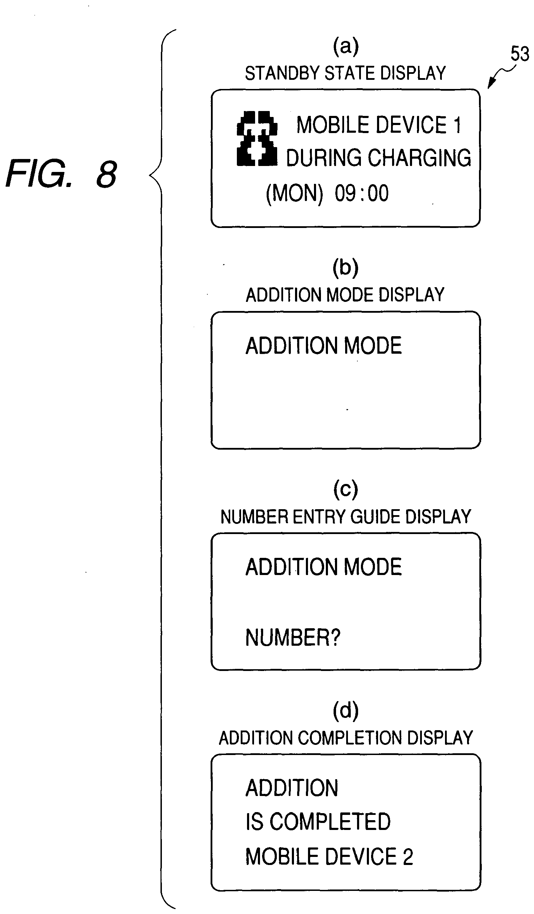

In the usual state, the mobile device 50 is in a standby state for accepting entry of the telephone number of a called party, etc. When the user sets the mobile device 50 to an addition mode by operating a mode switching button of the various buttons described above, the addition processing is started. In the standby state, information of the registration number, the day of the week, the time, a message indicating charging, etc., of the mobile device 50 is displayed on the display panel 53 as illustrated in FIG. 8 (a).

In the addition processing, first, at S910, a message to the effect that the operation mode of the mobile device 50 is the addition mode is displayed on the display panel 53 as illustrated in FIG. 8 (b).

- Next, the process goes to S911 and whether or not the user presses the stop button 54d for canceling the operation is determined. When it is determined that the user presses the stop button 54d, the addition processing is terminated. On the other hand, when it is determined at S911 that the user does not press the stop button 54d, then the process goes to S912.

At S912, whether or not a registration command is received is determined. This registration command is a command transmitted from the main device 10 at S140 in FIG. 5 described above and instructs the mobile device 50 to store the registration number specified by the registration command as the registration number of the mobile device 50. when it is determined at S912 that a registration command is not received, then the process goes to S913 and whether or not a predetermined time has elapsed since the mobile device 50 was set to the addition mode as described above is determined. When it is determined that the predetermined time has elapsed, the addition processing is terminated. On the other hand, when it is determined at S913 that the predetermined time has not elapsed, the process returns to S911.

When it is determined at S912 that a registration command is received, then the process goes to S920 and a number entry guide for requesting the user to enter the registration number of the mobile device 50 is displayed on the display panel 53 as illustrated in FIG. 8 (c) . That is, the message to the effect that the operation mode is the addition mode and a message for encouraging the user to enter the registration number (the registration number specified by the registration command) are displayed.

Next, the process goes to S921 and whether or not the user presses the dial button 54a, namely, whether or not the user enters a number is determined. When it is determined that the user does not press the dial button 54a, then the process goes to S922 and whether or not a predetermined time has elapsed is determined. When it is determined that the predetermined time has elapsed, the addition processing is terminated. On the other hand, when it is determined at S922 that the predetermined time has not elapsed, the process returns to S921.

When it is determined at S921 that the user presses the dial button 54a, then the process goes to S930.

At S930, whether or not the number entered by the user pressing the dial button 54a matches the registration number transmitted together with the registration command from the main device 10 is determined. When it is determined that they do not match, the addition processing is terminated. On the other hand, when it is determined at 930 that the numbers match, then the process goes to S940 and a response command is transmitted to the main device 10.

At S941, whether or not an acknowledge command is received is determined. This acknowledge command is a command transmitted from the main device 10 at S150 in FIG. 5 described above. When it is determined that the acknowledge command is not received, then the process goes to S942 and whether or not a predetermined time has elapsed is determined. When it is determined that the predetermined time has elapsed, the addition processing is terminated. On the other hand, when it is determined at S942 that the predetermined time has not elapsed, the process returns to S941.

When it is determined at S941 that the acknowledge command is received, then the process goes to S950 and the registration number transmitted from the main device 10 is stored in the EEPROM 74 as the registration number of the mobile device 50. That is, the mobile device 50 is registered for the main device 10.

Next, the process goes to S960 and a registration completion message and the registration number are displayed on the display panel 53 as illustrated in FIG. 8 (d). Then, the addition processing is terminated.

In the aspect, in the processing in FIG. 5, S120 functions as a display control unit; S130 functions as a selection unit; S131 functions as a notification unit; S132 and S133 function as a determination unit; S151 functions as a main device registration unit; S170 functions as a selection unit; S171 functions as a notification unit; S172 and S173 function as a determination unit; and S180 functions as a deletion unit. In the processing in FIG. 7, S950 functions as an additional device registration unit.

As described above, in the cordless extension telephone system 1 of the aspect, to register the mobile device 50, the main device 10 automatically selects the minimum one of the unused registration numbers as the registration number assigned to the mobile device 50. To cancel registration of the mobile device 50, the main device 10 automatically selects the mobile device 50 with the maximum registration number among the already registered mobile devices 50 as the mobile device whose registration is to be canceled (in other words, automatically selects the maximum from among the registration numbers).

Therefore, an entry mistake such that the user enters an already used registration number in registering the mobile device 50 or enters an unused registration number in canceling registration can be prevented from occurring. The minimum one of the unused registration numbers is selected in registering the mobile device 50 and the maximum registration number is selected in canceling registration, so that the ease of use is provided for the user in an easy-to-understand manner.

In the aspect, the main device 10 determines whether or not to adopt the registration number automatically selected by the main device 10 as described above based on user' s selection. Thus, the user can also cancel the number selected by the main device 10; the ease of use is provided for the user. The user needs only to specify whether or not to adopt the registration number selected by the main device 10 and need not select the registration number, so that the user can easily register the mobile device 50 or cancel registration thereof.

In the aspect, the main device 10 lists the use state of the registration numbers, in other words, the registration state of the mobile devices 50 on the display panel 13. Thus, the ease of use is provided for the user in an easy-to-understand manner.

### [Second aspect]

Next, a cordless extension telephone system 1 of a second aspect of the disclosure will be described. The cordless extension telephone system 1 of the second aspect has the same hardware configuration as that of the first aspect and parts identical with those previously described in the first aspect are denoted by the same reference numerals in the second aspect. Addition processing executed by a CPU of a mobile device 50 is also the same as that in the first aspect (similar comments apply to a third aspect).

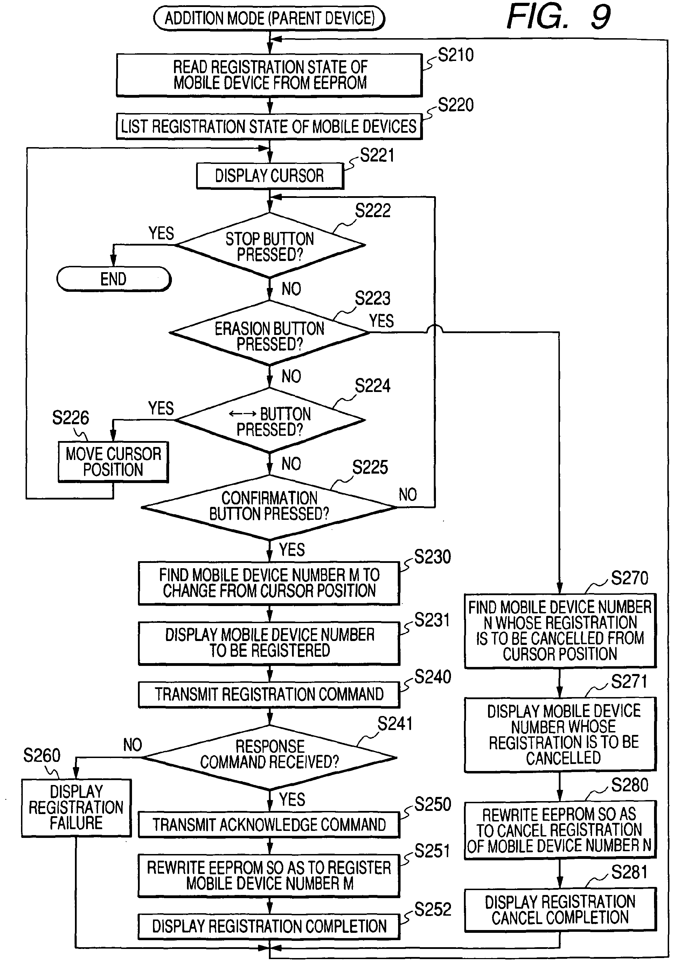

In the second aspect, a CPU 31 of a main device 10 executes addition processing in FIG. 9 in place of the addition processing in FIG. 5. The addition processing will be described below according to a flowchart of FIG. 9.

In the usual state, the main device 10 is in a standby state for accepting entry of the telephone number of a called party, etc., (see FIG. 6 (a)) . When the user sets the main device 10 to an addition mode by operating a mode switching button of the various buttons described above, the addition processing is started.

In the addition processing, first, at S210, the registration state of the mobile device 50 in the main device 10, in other words, which of the registration numbers used in registering the mobile device 50 is assigned to, namely, used for the mobile device 50 is read from EEPROM 34.

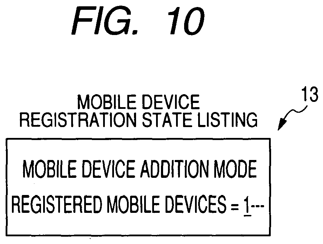

Next, the process goes to S220 and the registration state of the mobile device 50, in other words, which registration numbers are used is displayed on a display panel 13 as illustrated in FIG. 10. Next, the process goes to S221 and a cursor for the user to select the registration number to be used is displayed on the display panel 13 as in FIG. 10. An unused registration number is displayed simply as a horizontal line, thereby enabling the user to recognize that an additional mobile device 50 can be registered.

More specifically, on the display panel 13, the mode name representing the current operation mode, "mobile device addition mode, "is displayed and "registered mobile device" of item name is displayed below the "mobile device addition mode." The already used registration number and horizontal lines corresponding to unused registration numbers are displayed on the side of the item name and further a horizontal line as a cursor is displayed below the already used registration number. The user can move the cursor in a lateral direction between the registration numbers represented by the digit and horizontal line by operating a selection button 14e. For example, when the user presses the selection button 14e representing a right-direction arrow, the cursor moves one position to the right; when the user presses the selection button 14e representing a left-direction arrow, the cursor moves one position to the left.

Next, at S222, whether or not the user presses a stop button 14d for canceling the operation is determined. When it is determined that the user presses the stop button 14d, the addition processing is terminated. On the other hand, when it is determined at S222 that the user does not press the stop button 14d, then the process goes to S223.

At S223, whether or not the user presses an erasion button 14c for making a transition to registration cancel processing of the mobile device 50 is determined. When it is determined that the user does not press the erasion button 14c, then the process goes to S224 and whether or not the user presses the selection button 14e for moving the cursor is determined. When it is determined that the user presses the selection button 14e, then the process goes to S226 and the position of the cursor displayed on the display panel 13 is moved based on the user's operation of the selection button 14e as described above.

- On the other hand, when it is determined at S224 that the user does not press the selection button 14e, then the process goes to S225 and whether or not the user presses a confirmation button 14f for confirming use of the registration number specified by the cursor described above as the registration number of the mobile device 50 is determined. When it is determined that the user presses the confirmation button 14f, the process returns to S221. On the other hand, when it is determined at S225 that the user presses the confirmation button 14f, then the process goes to S230.

At S230, the registration number is calculated based on the position of the cursor, in other words, user's operation at S224 and S225. Next, the process goes to S231 and the registration number is displayed on the display panel 13 (see FIG. 6 (c)).

At S240, a registration command for instructing the mobile device 50 to execute registration processing for the main device 10 is transmitted to the mobile device 50.

Next, the process goes to S241. The processing at S241 to S260 is the same as the processing at S141 to S160 in FIG. 5 and therefore will not be described again.

When it is determined at S223 that the user presses the erasion button 14c, then the process goes to S270 and the registration number to be canceled (already used registration number) is calculated based on the position of the cursor described above. Next, the process goes to S271 and the registration number is displayed on the display panel 13 (see FIG. 6 (f)).

Next, at S280, the registration number calculated at S270 is stored in the EEPROM 34 as an unused registration number. At S281, a registration cancel completion message is displayed on the display panel 13 (see FIG. 6 (g)). Then, the process returns to S210.

In the aspect, in the processing in FIG. 9, S220 and S252 function as a display control unit; S222 to S230 functions as a selection unit; S222 to S270 functions as a selection unit; S251 functions as a main device registration unit; and S280 functions as a deletion unit.

As described above, in the cordless extension telephone system 1 of the aspect, to register the mobile device 50, the main device 10 selects the registration number to be assigned to the mobile device 50 from among the registration numbers displayed on the display panel 13 based on the cursor operation of the user. To cancel registration of the mobile device 50, the main device 10 selects the registration number corresponding to the mobile device 50 to be canceled from among the registration numbers displayed on the display panel 13 based on the cursor operation of the user.

Therefore, an entry mistake such that the user enters an already used registration number in registering the mobile device 50 or enters an unused registration number in canceling registration can be prevented from occurring. The user can also select his or her favorite number, so that the ease of use is provided for the user.

To register the mobile device 50, the user enters the already used registration number (selects the already used registration number by cursor operation), whereby the user can easily replace the already used mobile device 50 with the mobile device to be newly registered for registration.

In the aspect, the main device 10 lists the use state of the registration numbers, in other words, the registration state of the mobile devices 50 on the display panel 13. Thus, the ease of use is provided for the user in an easy-to-understand manner.

### [Third aspect]

Next, a cordless extension telephone system 1 of a third aspect of the disclosure will be described.

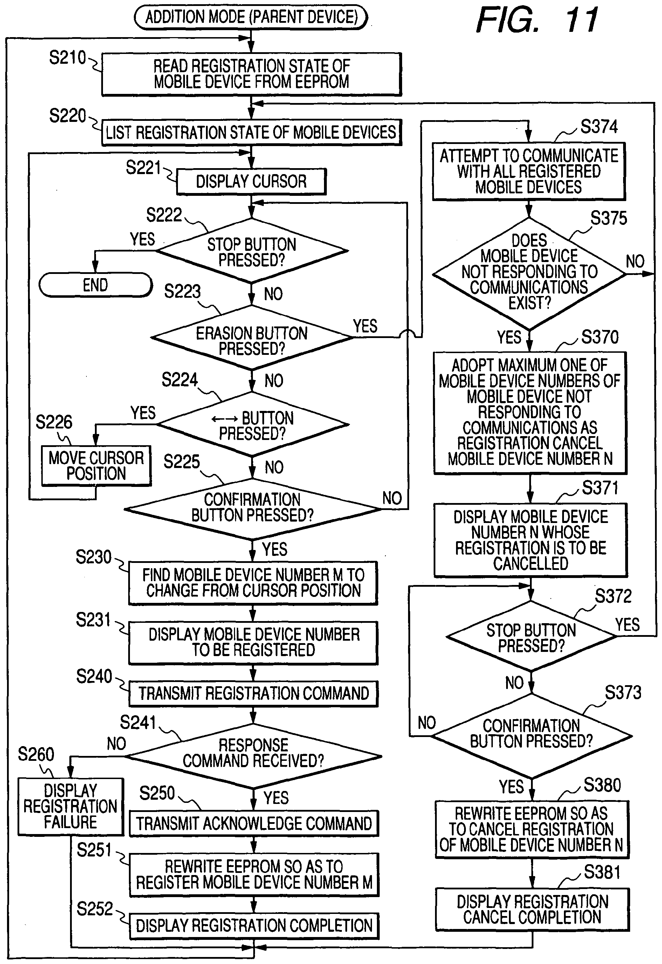

In the third aspect, a CPU 31 of a main device 10 executes addition processing in FIG. 11 in place of the addition processing in FIG. 9. Processing at S210 to S260 in FIG. 11 is the same as the processing at S210 to S260 in FIG. 9 and only the differences between the second and third aspects will be described below according to a flowchart of FIG. 11.

In the addition processing, when it is determined at S223 that the user presses an erasion button 14c for making a transition to registration cancel processing of a mobile device 50, then the process goes to S374.

At S374, an attempt is made to communicate with all mobile devices 50 registered for the main device 10.

Next, the process goes to S375 and whether or not there is a mobile device 50 not responding to the communications is determined. When it is determined that there is no mobile device 50 not responding to the communications, the process returns to S220. On the other hand, when it is determined at S375 that there is a mobile device 50 not responding to the communications, the process goes to S370.

At S370, registration of the mobile device 50 with the maximum registration number among the mobile devices 50 not responding to the communications is to be canceled. This means that registration of the maximum registration number of the registration numbers corresponding to the mobile devices 50 not responding to the communications is to be- canceled. At S371, the registration number is displayed on a display panel 13 (see FIG. 6 (f)).

Next, the process goes to S372 and whether or not the user presses a stop button 14d for canceling the operation is determined. When it is determined that the user presses the stop button 14d, the process returns to S220 . On the other hand, when it is determined at S372 that the user does not press the stop button 14d, then the process goes to S373.

- At S373, whether or not the user presses a confirmation button 14f for confirming the registration number to be canceled is determined. When it is determined that the user does not press the confirmation button 14f, the process returns to S372. On the other hand, when it is determined at S373 that the user presses the confirmation button 14f, then the process goes to S380.

At S380, the registration number to be canceled is stored in EEPROM 34 as an unused registration number. At S381, a registration cancel completion message is displayed on the display panel 13 (see FIG. 6 (g)). Then, the process returns to S210.

In the aspect, in the processing in FIG. 11, S374 and S375 function as a detection unit and S380 functions as a deletion unit.

As described above, in the cordless extension telephone system 1 of the aspect, to cancel registration of the mobile device 50, the main device 10 detects the mobile device 50 that cannot communicate with the main device, and cancels registration of the detected mobile device 50. The possible reason why the mobile device 50 cannot communicate with the main device is that the mobile device 50 fails, etc.

Thus, according to the cordless extension telephone system 1 of the aspect, registration of the mobile device 50 that cannot communicate with the main device, namely, cannot be used can be easily canceled, so that the ease of use is provided for the user.

Although the aspects of the invention have been described, it is to be understood that the invention is not limited to the specific aspects thereof and that various forms can be adopted in the invention without departing from the scope of the claims. For example, in the aspects described above, to display the registration numbers on the display panel 13, digits and horizontal bars are displayed, enabling the user to distinguish the already used registration numbers from unused registration numbers; however, for example, all registration numbers may be displayed as digits in different colors, sizes, item names, etc., for enabling the user to distinguish the already used registration numbers from unused registration numbers.

In the aspects described above, the main device 10 transmits the registration number to be used together with a registration command to the mobile device 50 and the registration number is entered in the mobile device 50 through the dial button 54a, etc., whereby the registration number is stored in the mobile device 50 as the registration number of the mobile device 50; however, entry through various operation buttons such as the dial button 54a is not limited to entry of the registration number and may be entry of any user-defined information, for example, key information entered through the main device 10 (information entered through various operation buttons such as the dial button 14a).

## Claims

1. A communication apparatus comprising a main device (10) and an additional device (50) capable of communicating with the main device (10) wirelessly, the main device (10) comprising:
a main device storage section (34); a display unit (13) for displaying information;
a display control unit (31) for causing the display unit (13) to display registration numbers;
said communication apparatus being **characterized in that** the main device additionally comprises:
a selection unit (31) for selecting one registration number;
a main device registration unit (31) for transmitting the registration number selected by the selection unit to the additional device;
a notification unit for notifying the registration number selected by the selection unit; and
a determination unit for determining whether or not the selected registration number is to be adopted by a user of the additional device upon reception of a response command from the additional device responsive to the transmission of the selected registration number by the main device registration unit and,
upon determination that the selected registration number is adopted, for permitting the main device registration unit to store information indicating that the selected registration number is used as the registration number of the additional device (50) in the main device storage section.

2. The communication apparatus as claimed in claim 1 wherein:
the selection unit (31) is arranged to select one registration number according to a specific rule from among provided registration numbers to be assigned to an additional device; and
the display control unit (31) is arranged to cause the display unit (13) to display information indicating which of the registration numbers is used as the registration number of the additional device (50) based on the information stored in the main device storage section (34).

3. The communication apparatus as claimed in claim 2, wherein the selection unit is arranged to select a minimum registration number from among unused registration numbers as the registration number of the additional device.

4. The communication apparatus as claimed in claim 2 or 3, wherein the additional device comprises an additional device registration unit for storing the registration number transmitted by the main device registration unit in an additional device storage section included in the additional device.

5. The communication apparatus as claimed in claim 1, wherein:
the display control unit is arranged to cause the display unit to list a plurality of provided registration numbers to be assigned to an additional device; and
the selection unit is arranged to select one registration number out of a registration number list displayed on the display unit.

6. The communication apparatus as claimed in claim 5, wherein the display control unit is arranged to cause the display unit to list unused registration numbers not corresponding to the information indicating that the registration number is used as the registration number of the additional device, stored in the main device storage section among the registration numbers.

7. The communication apparatus as claimed in claim 5, wherein
the display control unit is arranged to cause the display unit to list the already used registration numbers corresponding to the information indicating that the registration number is used as the registration number of the additional device, stored in the main device storage section among the registration numbers.

8. The communication apparatus as claimed in claim 5, 6 or 7, wherein the additional device comprises an additional device registration unit for storing the registration number transmitted by the main device registration unit in an additional device storage section included in the additional device as the registration number of the additional device.

9. A communication apparatus comprising a main device and an additional device capable of communicating with the main device wirelessly, the main device comprising:
a main device storage section for storing, for each additional device already using a registration number, information indicating which one of provided registration numbers is used as the registration number of the additional device;
a selection unit for selecting one registration number; and
a deletion unit;
a notification unit for notifying a user of the main device of the registration number selected by the selection unit; and
a determination unit for determining whether or not the selected registration number is to be adopted by the user of the main device, and upon determination that the selected registration number is adopted, for permitting the main device deletion unit to delete the information indicating that the registration number selected by the selection unit is used as the registration number of the additional device from the main device storage section, said communication apparatus being **characterized in that** the selection unit comprises a detection unit for detecting at least one additional device that cannot communicate with the main device from among the additional devices already using registration numbers, wherein the selection unit is configured for selecting the registration number corresponding to one of the at least one additional devices detected by the detection unit.

10. The communication apparatus as claimed in claim 9, wherein:
the selection unit (31) is arranged to select one registration number stored in the main device storage section according to a specific rule from among registration numbers detected by the deletion unit corresponding to the information indicating that the registration number is used as the registration number of the additional device.

11. The communication apparatus as claimed in claim 9, wherein the selection unit is arranged to select a maximum registration number from among registration numbers detected by the detection unit.

12. A communication apparatus as claimed in claim 9 wherein:
the main device further comprises:
a display unit for displaying information; and
a display control unit for causing the display unit to display information indicating which of the registration numbers is used as the registration number of the additional device based on the information stored in the main device storage section; wherein
the selection unit is arranged to select one registration number used as the registration number of the additional device from among the registration numbers.

## Patentansprüche

1. Kommunikationsgerät mit einer Hauptvorrichtung (10) und einer zusätzlichen Vorrichtung (50), die mit der Hauptvorrichtung (10) drahtlos kommunizieren kann, wobei die Hauptvorrichtung (10) Folgendes aufweist:
einen Hauptvorrichtungsspeicherbereich (34);
eine Anzeigeeinheit (13) zum Anzeigen von Informationen;
eine Anzeigesteuereinheit (31), um die Anzeigeeinheit (13) zum Anzeigen von Registrierungsnummern zu veranlassen;
wobei das Kommunikationsgerät **dadurch gekennzeichnet ist, dass** die Hauptvorrichtung zusätzlich Folgendes aufweist:
eine Auswahleinheit (31) zum Auswählen von einer Registrierungsnummer;
eine Hauptvorrichtungsregistriereinheit (31) zum Übertragen der durch die Auswahleinheit ausgewählten Registrierungsnummer zu der zusätzlichen Vorrichtung;
eine Mitteilungseinheit zum Mitteilen der durch die Auswahleinheit ausgewählten Registrierungsnummer; und
eine Bestimmungseinheit zum Bestimmen, ob die ausgewählte Registrierungsnummer durch einen Benutzer der zusätzlichen Vorrichtung bei Aufnahme eines Antwortbefehls von der zusätzlichen Vorrichtung als Reaktion auf die Übertragung der ausgewählten Registrierungsnummer durch die Hauptvorrichtungsregistriereinheit zu übernehmen ist oder nicht; und
bei einer Bestimmung, dass die ausgewählte Registrierungsnummer übernommen wird, zum Erlauben der Hauptvorrichtungsregistriereinheit zum Speichern von Informationen, die angeben, dass die ausgewählte Registrierungsnummer als die Registrierungsnummer der zusätzlichen Vorrichtung (50) verwendet wird, in den Hauptvorrichtungsspeicherbereich.

2. Kommunikationsgerät gemäß Anspruch 1, wobei:
die Auswahleinheit (31) dazu eingerichtet ist, eine Registrierungsnummer gemäß einer spezifischen Regel aus bereitgestellten Registrierungsnummern auszuwählen, die einer zusätzlichen Vorrichtung zuzuweisen sind; und
die Anzeigesteuereinheit (31) dazu eingerichtet ist, die Anzeigeeinheit (13) zum Anzeigen von Informationen zu veranlassen, die angeben, welche Registrierungsnummer als die Registrierungsnummer der zusätzlichen Vorrichtung (50) verwendet wird, und zwar auf der Grundlage der in dem Hauptvorrichtungsspeicherbereich (34) gespeicherten Informationen.

3. Kommunikationsgerät gemäß Anspruch 2, wobei die Auswahleinheit dazu eingerichtet ist, eine minimale Registrierungsnummer aus unbenutzten Registrierungsnummern als die Registrierungsnummer der zusätzlichen Vorrichtung auszuwählen.

4. Kommunikationsgerät gemäß Anspruch 2 oder 3, wobei die zusätzliche Vorrichtung eine zusätzliche Vorrichtungsregistriereinheit zum Speichern der Registrierungsnummer aufweist, die durch die Hauptvorrichtungsregistriereinheit übertragen wird, und zwar in einen zusätzlichen Vorrichtungsspeicherbereich, der in der zusätzlichen Vorrichtung enthalten ist.

5. Kommunikationsgerät gemäß Anspruch 1, wobei:
die Anzeigesteuereinheit dazu eingerichtet ist, die Anzeigeeinheit zum Auflisten von vielen bereitgestellten Registrierungsnummern zu veranlassen, die einer zusätzlichen Vorrichtung zuzuweisen sind; und
die Auswahleinheit dazu eingerichtet ist, eine Registrierungsnummer aus einer Registrierungsnummernliste auszuwählen, die an der Anzeigeeinheit angezeigt wird.

6. Kommunikationsgerät gemäß Anspruch 5, wobei die Anzeigesteuereinheit dazu eingerichtet ist, die Anzeigeeinheit zum Auflisten von unbenutzten Registrierungsnummern zu veranlassen, die nicht den Informationen entsprechen, die angeben, dass die Registrierungsnummer als die Registrierungsnummer der zusätzlichen Vorrichtung verwendet wird, die in dem Hauptvorrichtungsspeicherbereich gespeichert sind, und zwar aus den Registrierungsnummern.

7. Kommunikationsgerät gemäß Anspruch 5, wobei
die Anzeigesteuereinheit dazu eingerichtet ist, die Anzeigeeinheit zum Auflisten der bereits verwendeten Registrierungsnummern entsprechend den Informationen zu veranlassen, die angeben, dass die Registrierungsnummer als die Registrierungsnummer der zusätzlichen Vorrichtung verwendet wird, die in dem Hauptvorrichtungsspeicherbereich gespeichert sind, und zwar aus den Registrierungsnummern.

8. Kommunikationsgerät gemäß Anspruch 5, 6, oder 7, wobei die zusätzliche Vorrichtung eine zusätzliche Vorrichtungsregistriereinheit zum Speichern der Registrierungsnummer aufweist, die durch die Hauptvorrichtungsregistriereinheit übertragen wird, und zwar als die Registrierungsnummer der zusätzlichen Vorrichtung in einen zusätzlichen Vorrichtungsspeicherbereich, der in der zusätzlichen Vorrichtung enthalten ist.

9. Kommunikationsgerät mit einer Hauptvorrichtung und einer zusätzlichen Vorrichtung, die mit der Hauptvorrichtung drahtlos kommunizieren kann, wobei die Hauptvorrichtung Folgendes aufweist:
einen Hauptvorrichtungsspeicherbereich zum Speichern von Informationen, die angeben, welche der bereitgestellten Registrierungsnummern als die Registrierungsnummer der zusätzlichen Vorrichtung verwendet wird, und zwar für jede zusätzliche Vorrichtung, die bereits eine Registrierungsnummer verwendet;
eine Auswahleinheit zum Auswählen von einer Registrierungsnummer;
eine Löscheinheit;
eine Mitteilungseinheit, um einem Benutzer der Hauptvorrichtung die Registrierungsnummer mitzuteilen, die durch die Auswahleinheit ausgewählt ist; und
eine Bestimmungseinheit zum Bestimmen, ob die ausgewählte Registrierungsnummer durch den Benutzer der Hauptvorrichtung bei einer Bestimmung zu übernehmen ist oder nicht, dass die ausgewählte Registrierungsnummer übernommen wird, um der Löscheinheit ein Löschen der Informationen aus dem Hauptvorrichtungsspeicherbereich zu erlauben, die angeben, dass die Registrierungsnummer, die durch die Auswahleinheit ausgewählt ist, als die Registrierungsnummer der zusätzlichen Vorrichtung verwendet wird,
wobei das Kommunikationsgerät **dadurch gekennzeichnet ist, dass**
die Auswahleinheit eine Erfassungseinheit zum Erfassen von zumindest einer zusätzlichen Vorrichtung aufweist, die mit der Hauptvorrichtung nicht kommunizieren kann, und zwar von den zusätzlichen Vorrichtungen, die bereits Registrierungsnummern verwenden, wobei die Auswahleinheit dazu konfiguriert ist, die Registrierungsnummer entsprechend einer der zumindest einen zusätzlichen Vorrichtung auszuwählen, die durch die Erfassungseinheit erfasst sind.

10. Kommunikationsgerät gemäß Anspruch 9, wobei:
die Auswahleinheit (31) dazu eingerichtet ist, eine in dem Hauptvorrichtungsspeicherbereich gespeicherte Registrierungsnummer gemäß einer spezifischen Regel aus Registrierungsnummern auszuwählen, die durch die Löscheinheit erfasst sind, und zwar entsprechend den Informationen, die angeben, dass die Registrierungsnummer als die Registrierungsnummer der zusätzlichen Vorrichtung verwendet wird.

11. Kommunikationsgerät gemäß Anspruch 9, wobei die Auswahleinheit dazu eingerichtet ist, eine maximale Registrierungsnummer aus Registrierungsnummern auszuwählen, die durch die Erfassungseinheit erfasst sind.

12. Kommunikationsgerät gemäß Anspruch 9, wobei:
die Hauptvorrichtung des Weiteren Folgendes aufweist:
eine Anzeigeeinheit zum Anzeigen von Informationen; und
eine Anzeigesteuereinheit zum Veranlassen der Anzeigeeinheit zum Anzeigen von Informationen, die angeben, welche der Registrierungsnummern als die Registrierungsnummer der zusätzlichen Vorrichtung verwendet wird, und zwar auf der Grundlage der in dem Hauptvorrichtungsspeicherbereich gespeicherten Informationen; wobei
die Auswahleinheit dazu eingerichtet ist, aus den Registrierungsnummern eine Registrierungsnummer auszuwählen, die als die Registrierungsnummer der zusätzlichen Vorrichtung verwendet wird.

## Revendications

1. Dispositif de communication comprenant un dispositif principal (10) et un dispositif additionnel (50) pouvant communiquer à distance avec le dispositif principal (10), le dispositif principal (10) comprenant :
une section de mémorisation de dispositif principal (34) ;
une unité d'affichage (13) destinée à afficher des informations ;
une unité de commande d'affichage (31) destinée à amener l'unité d'affichage (13) à afficher des numéros d'enregistrement ;
ledit dispositif de communication étant **caractérisé en ce que** le dispositif principal comprend, en outre :
une unité de sélection (31) destinée à sélectionner un premier numéro d'enregistrement ;
une unité d'enregistrement de dispositif principal (31) destinée à transmettre le numéro d'enregistrement sélectionné par l'unité de sélection au dispositif additionnel ;
une unité de notification destinée à notifier le numéro d'enregistrement sélectionné par l'unité de sélection ; et
une unité de détermination destinée à déterminer si le numéro d'enregistrement sélectionné doit ou non être adopté par un utilisateur du dispositif additionnel lors de la réception d'une instruction de réponse à partir du dispositif additionnel en fonction de la transmission du numéro d'enregistrement sélectionné par l'unité d'enregistrement de dispositif principal, et
lors de la détermination du fait que le numéro d'enregistrement sélectionné est adopté, afin de permettre à l'unité d'enregistrement de dispositif principal de mémoriser des informations indiquant que le numéro d'enregistrement sélectionné est utilisé en tant que numéro d'enregistrement du dispositif additionnel (50) dans la section de mémorisation de dispositif principal.

2. Dispositif de communication selon la revendication 1, dans lequel :
l'unité de sélection (31) est agencée de manière à sélectionner un numéro d'enregistrement en fonction d'une règle spécifique parmi des numéros d'enregistrement fournis afin de les affecter à un dispositif additionnel ; et
l'unité de commande d'affichage (31) est agencée de manière à amener l'unité d'affichage (13) à afficher des informations indiquant lequel des numéros d'enregistrement est utilisé en tant que numéro d'enregistrement du dispositif additionnel (50) sur la base des informations mémorisées dans la section de mémorisation de dispositif principal (34).

3. Dispositif de communication selon la revendication 2, dans lequel l'unité de sélection est agencée de manière à sélectionner un numéro d'enregistrement minimum parmi des numéros d'enregistrement inutilisés en tant que numéro d'enregistrement du dispositif additionnel.

4. Dispositif de communication selon la revendication 2 ou 3, dans lequel le dispositif additionnel comprend une unité d'enregistrement de dispositif additionnel destinée à mémoriser le numéro d'enregistrement transmis par l'unité d'enregistrement de dispositif principal dans une section de mémorisation de dispositif additionnel dans le dispositif additionnel.

5. Dispositif de communication selon la revendication 1, dans lequel :
l'unité de commande d'affichage est agencée de manière à amener l'unité d'affichage à lister une pluralité de numéros d'enregistrement à affecter à un dispositif additionnel ; et
l'unité de sélection est agencée de manière à sélectionner un numéro d'enregistrement parmi une liste de numéro d'enregistrement affichée sur l'unité d'affichage.

6. Dispositif de communication selon la revendication 5, dans lequel l'unité de commande d'affichage est agencée de manière à amener l'unité d'affichage à lister des numéros d'enregistrement inutilisés ne correspondant pas aux informations indiquant que le numéro d'enregistrement est utilisé en tant que numéro d'enregistrement du dispositif additionnel, mémorisé dans la section de mémorisation de dispositif principal parmi les numéros d'enregistrement.

7. Dispositif de communication selon la revendication 5, dans lequel
l'unité de commande d'affichage est agencée de manière à amener l'unité d'affichage à lister les numéros d'enregistrement déjà utilisés correspondant aux informations indiquant que le numéro d'enregistrement est utilisé en tant que numéro d'enregistrement du dispositif additionnel, mémorisé dans la section de mémorisation de dispositif principal parmi les numéros d'enregistrement.

8. Dispositif de communication selon la revendication 5, 6 ou 7, dans lequel le dispositif additionnel comprend une unité d'enregistrement de dispositif additionnel destinée à mémoriser le numéro d'enregistrement transmis par l'unité d'enregistrement de dispositif principal dans une section de mémorisation de dispositif additionnel contenue dans le dispositif additionnel en tant que numéro d'enregistrement du dispositif additionnel.

9. Dispositif de communication comprenant un dispositif principal et un dispositif additionnel capable de communiquer à distance avec le dispositif principal, le dispositif principal comprenant :
une section de mémorisation de dispositif principal destinée à mémoriser, pour chaque dispositif additionnel utilisant déjà un numéro d'enregistrement, des informations indiquant lequel des numéros d'enregistrement fournis est utilisé en tant que numéro d'enregistrement du dispositif additionnel ;
une unité de sélection destinée à sélectionner un numéro d'enregistrement, et
une unité d'effacement ;
une unité de notification destinée à notifier à un utilisateur du dispositif principal le numéro d'enregistrement sélectionné par l'unité de sélection ; et
une unité de détermination destinée à déterminer si le numéro d'enregistrement sélectionné doit ou non être adopté par l'utilisateur du dispositif principal et, lors de la détermination du fait que le numéro d'enregistrement sélectionné est adopté, à permettre à l'unité d'effacement de dispositif principal d'effacer les informations indiquant que le numéro d'enregistrement sélectionné par l'unité de sélection est utilisé en tant que numéro d'enregistrement du dispositif additionnel à partir de la section de mémorisation de dispositif principal,
ledit dispositif de communication étant **caractérisé en ce que**
l'unité de sélection comprend une unité de détection destiné à détecter au moins un dispositif additionnel qui ne peut pas communiquer avec le dispositif principal parmi les dispositifs additionnels utilisant déjà des numéros d'enregistrement, dans lequel l'unité de sélection est configurée de manière à sélectionner le numéro d'enregistrement correspondant à l'un des au moins un dispositifs additionnels détectés par l'unité de détection.

10. Dispositif de communication selon la revendication 9, dans lequel :
l'unité de sélection (31) est agencée de manière à sélectionner un numéro d'enregistrement mémorisé dans la section de mémorisation de dispositif principal en fonction d'une règle spécifique parmi des numéros d'enregistrement détectés par l'unité d'effacement correspondant aux informations indiquant que le numéro d'enregistrement est utilisé en tant que numéro d'enregistrement du dispositif additionnel.

11. Dispositif de communication selon la revendication 9, dans lequel l'unité de sélection est agencée de manière à sélectionner un numéro d'enregistrement maximum parmi des numéros d'enregistrement détectés par l'unité de détection.

12. Dispositif de communication selon la revendication 9, dans lequel :
le dispositif principal comprend, en outre :
une unité d'affichage destinée à afficher des informations ; et
une unité de commande d'affichage destinée à amener l'unité d'affichage à afficher des informations indiquant lequel des numéros d'enregistrement est utilisé en tant que numéro d'enregistrement du dispositif additionnel sur la base des informations mémorisées dans la section de mémorisation de dispositif principal ; dans lequel
l'unité de sélection est agencée de manière à sélectionner un numéro d'enregistrement utilisé en tant que numéro d'enregistrement du dispositif additionnel parmi les numéros d'enregistrement.
